Europäisches Patentamt

**European Patent Office**

**Office européen des brevets**

(11) Publication number: **0 140 699**
A2

(12) # EUROPEAN PATENT APPLICATION

(21) Application number: **84307449.3**

(22) Date of filing: **29.10.84**

(51) Int. Cl.⁴: **A 01 C 7/04**

(30) Priority: **31.10.83 US 546831**

(43) Date of publication of application: **08.05.85**
Bulletin 85/19

(84) Designated Contracting States: **DE FR GB**

(71) Applicant: **DEERE & COMPANY, 1 John Deere Road, Moline Illinois 61265 (US)**

(72) Inventor: **Webber, Jerry Don, 111 6th Avenue, Moline Illinois 61265 (US)**

(74) Representative: **Pears, David Ashley et al, REDDIE & GROSE 16 Theobalds Road, London WC1X 8PL (GB)**

(54) **Disk mounting arrangement.**

(57) A seed disk in a vacuum seed meter has a central mounting aperture in the form of a slot widening to a circular hole at its centre. When the disk is mounted on the hub of the seed meter a correspondingly shaped raised portion of the hub is received in the aperture to key the disk to the hub and a correspondingly shaped handle (24) passes through the aperture. The handle is retained rotatably on a shaft by a cap (56) and a coil spring under the cap urges the handle towards the hub. After the disk has been fitted, the handle is rotated as indicated by arrow (76) and the arms (60, 62) of the handle ride up ramps (34, 36) until the arms click into detent recesses (82. 80).

## DISK MOUNTING ARRANGEMENT

The present invention relates to an arrangement for releasably mounting a disk or other relatively flat member on a hub, comprising a relatively flat member having an elongated aperture therein, a hub, and an elongated handle rotatably mounted on the hub, the handle being adapted to fit through the elongated aperture and when rotated out of alignment with the aperture, to trap the said member on the hub.

It is sometimes necessary that a disk be releasably mounted on a rotatable hub, e.g. if the disks are interchangeable or are removed for cleaning or for other reasons.

One example of an arrangement in which a disk must be releasably mounted on a rotatable hub is a seed meter in which a relatively flat seed disk is releasably mounted on a rotatable hub within the generally cylindrical housing of the seed meter. The generally cylindrical housing is composed of mating half shells which are hinged and are coupled together with a clasp. In this manner, the housing may be opened to permit removal of or replacement of the seed disk. Removal of the seed disk may be necessary in order to clean the seed disk or to clean the interior of the seed meter housing or otherwise gain access thereto. Different seed disks are used to meter different types of seeds. Therefore, removal of the seed disk may be necessary in order to replace it with another seed disk designed for use with a different type of seed which is to be planted. The seed disk in a vacuum seed meter must be securely retained on the hub so as to be able to withstand the force of a seed mass and air pressure on the disk and must be driven by the hub through the seed mass and past various other restraining objects within the seed meter housing. In addition, the seed disk must form a relatively airtight seal with the hub so that the vacuum created at one side of the disk communicates with the opposite side of the disk only through apertures in a plurality of seed cells within the disk. At the same time the disk should be capable of relatively easy replacement and preferably without the need for special tools.

A number of different arrangements are known for releasably mounting a relatively flat member such as a seed disk on a rotating hub within a seed meter or similar agricultural implement. One such arrangement is shown in US Patent 2,695,733 wherein the disk is retained by a cap fitted on to a T-bar by a bayonet fixing. The arrangement is relatively complicated and such arrangements have proved to be cumbersome if not impractical because of the difficulty involved in changing the seed disk. In many cases special tools are required. Even if special tools are not required, considerable physical effort may be necessary. These factors become even more of a problem in situations involving limited space such as where the planting units are spaced closely together for planting narrow rows.

At the same time certain other arrangements in the art have achieved some simplicity but have not addressed the particular problems peculiar to devices such as agricultural seed meters where a tight, sealing, load-bearing fit are necessary. Such arrangements include those shown in US Patent 3,214,996 where replaceable cams are releasably mounted on a rotatable bushing by a spring loaded retaining ring and those shown in US Patent 4,101,232 where legs are mounted on a disk-like member using a lugged post in conjunction with a head having ramped bearing surfaces.

The object of the present invention is to provide an improved arrangement which is useable in relatively quick and simple fashion and without the need for special tools or the expenditure of considerable physical effort. It is furthermore desirable to provide an arrangement in which the disk is capable of forming a seal with the hub as well as having a substantial load-bearing fit.

The arrangement in accordance with the invention is characterised by a ramp surface adjacent the aperture, whereby the handle rides up the ramp surface when it is rotated out of alignment with the aperture and jams the said member on to the hub.

In a preferred arrangement in accordance with the invention, a rotatable hub on which a disk is releasably mounted is provided with a central raised portion having a cross-sectional shape similar to that of a central mating elongated slot in the disk. The raised portion of the hub is slightly smaller in size than the slot in the disk so that the raised portion is received within the slot when the disk is mounted on the hub. The raised portion of the hub seats the disk on the hub in relatively secure, close-fitting fashion so that the disk is capable of bearing a substantial load when driven in response to rotation of the hub.

An elongated handle having a cross-sectional shape similar to that of the raised portion of the hub is disposed on the raised portion by a shaft which is mounted on the raised portion and which has the handle slidably and rotatably mounted thereon. The handle is resiliently biased toward and into contact with the raised portion by a coil spring which encircles the shaft and resides between the elongated handle and a keeper at the end of the shaft opposite the raised portion. The spring seats a pair of rounded detent surfaces at the bottom of opposite portions of the handle in opposite detent recesses in the raised portion of the hub to maintain the handle in alignment with the raised portion of the hub when the disk is positioned on the hub.

The disk has a pair of camming ramps formed therein on opposite sides of the elongated slot. The camming ramps are of partially circular configuration and have heights which gradually increase in a common direction around the slot. Each of the camming ramps has a detent recess therein at a position of maximum height thereon.

The disk is releasably mounted on the hub by inserting the elongated handle through the slot in the disk so that the disk is seated on the hub and the raised portion of the hub resides within the slot. The elongated handle is then rotated, causing it to unseat from the opposite detent recesses in the raised portion at the hub and to ride up on the opposite camming ramps against the resistance of the coil spring disposed between the handle and the keeper at the end of the shaft. Eventually the opposite detent surfaces at the bottom of the elongated handle are pushed into the detent recesses in the ramps by the coil spring to complete the disk mounting operation.

Removal of the disk is accomplished by rotating the elongated handle in the opposite direction to unseat the detent surfaces of the opposite portions of the handle from the detent recesses in the ramps and then allow such opposite portions to ride down along the opposite camming ramps until the handle is aligned with the raised portion of the hub and the slot and the detent surfaces of the handle are seated in the detent recesses in the raised portion. The disk may then be pulled away from the hub to complete the removal thereof.

A sealing, relatively airtight fit between the disk and the hub is accomplished by providing the side of the disk opposite the pair of camming ramps and adjacent the hub with an annular flange which seats against the face of the hub when the disk is seated in place on the hub.

The invention will be described in more detail, by way of example and with reference to the accompanying drawings, in which:

Fig 1 is a perspective view of a seed meter in an open position and showing a seed disk in conjunction with a disk mounting arrangement embodying the invention;

Fig 2 is a front view of the seed meter of Fig 1 and showing the reverse side of the seed disk;

Fig 3 is a sectional view of the seed meter of Fig 1 with the seed disk releasably mounted and the meter in the closed position;

Fig 4 is a perspective, exploded view of a portion of the disk mounting arrangement illustrating the manner in which the handle is mounted on the hub;

Fig 5 is a plan view of a central portion of the seed disk illustrating the details thereof;

Fig 6 is a plan view of the central portion of the seed disk with the disk placed over the handle and onto the hub;

Fig 7 is a plan view of the central portion of the seed disk illustrating the position that the handle assumes after it has been rotated up on opposite camming ramps and into detent recesses therein; and

Fig 8 is a perspective view of the central portion of the seed disk.

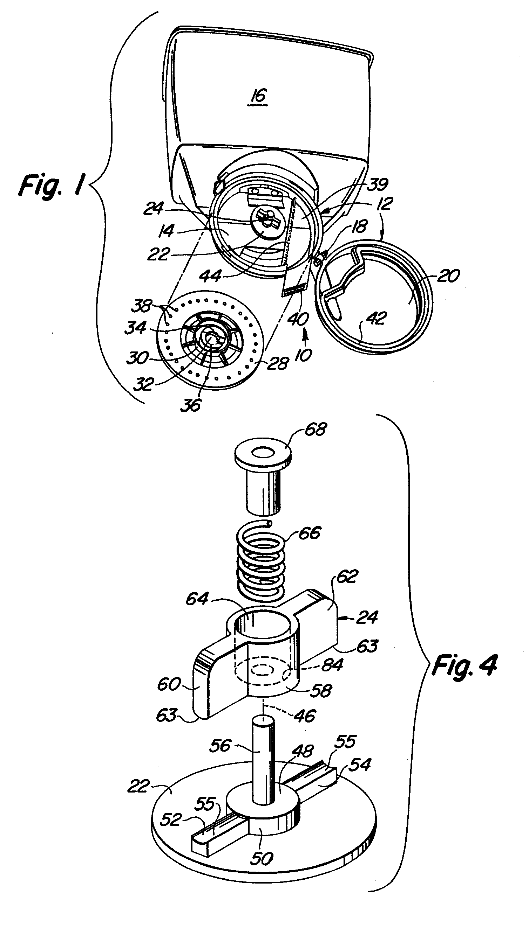

Fig 1 illustrates a seed meter 10 which has a generally cylindrical housing 12. The housing 12 is composed of a first half shell 14 which is mounted at the base of a seed hopper 16 and is coupled via a hinge 18 to an opposite, mating second half shell 20.

A hub 22 is rotatably mounted within the first half shell 14 at the centre thereof. An elongated handle 24 mounted on the hub 22 forms part of a disk mounting arrangement 26 in accordance with the invention for releasably mounting a seed disk 28 on the hub 22. As described hereafter in detail, the seed disk 28 has a central portion 30 having an elongated slot 32 therein. A pair of curved camming ramps 34 and 36 are formed within the central portion 30 of the seed disk 28 on opposite sides of the elongated slot 32. When the seed disk 28 is placed on the hub 22, the elongated handle 24 extends through the elongated slot 32. Rotation of the handle 24 causes the opposite ends thereof to ride up on the camming ramps 34 and 36 of the seed disk 28 to a pair of opposite detent recesses in which the handle becomes seated.

With the seed disk 28 mounted on the hub 22 using the disk mounting arrangement 26, the second half shell 20 may be closed over the seed disk 28 and onto the first half shell 14 to close the seed meter 10. Seeds from the hopper 16 flow into the bottom of the first half shell 14 where they form a seed mass on one side of the seed disk 28. Seed cells 37 on that side of the seed disk 28 agitate, accelerate and then capture therein individual seeds from the seed mass. The individual seeds are held in the cells by the force of a vacuum created within the second half shell 20 on the opposite side of the seed disk 28 and which communicates with the seed cells 37 via apertures 38 located at the bottoms of the seed cells 37 and which extend through the thickness of the seed disk 28. The seeds are held by such vacuum until they reach a seed discharge area 39 within the first half shell 14 which is isolated from the effects of the vacuum within the second half shell 20. This causes the individual seeds to be released from the seed cells 37 in the seed disk 28 so that the seeds fall through a seed chute 40 at the bottom of the first half shell 14 to the ground below.

As the seed disk 28 rotates within the generally cylindrical housing 12 it encounters considerable resistance from a number of items including the seed mass at the bottom of the first half shell 14, a seal 42 at the inside of the second half shell 20 which bears against the opposite side of the seed disk 28 from the seed mass, and a divider brush 44 which is mounted within the first half shell 14 and which helps to separate the seed discharge area 39. This resistance requires that the seed disk 28 be mounted on the hub 22 in positive, non-slip fashion. At the same time the seed disk 28 must be positioned within the generally cylindrical housing 12 in relatively accurate and precise fashion requiring a relatively accurate, precise fit of the seed disk 28 on the hub 22. This fit must be maintained in the face of forces exerted on the sides of the disk by the seed mass and the vacuum. In addition, the presence of the vacuum within the second half shell 20 requires a relatively air-tight mounting of the seed disk 28 onto the hub 22 so that the seed cells 37 located about the seed disk 28 are exposed to the full force of the vacuum within the second half shell 20 via the aperture 38.

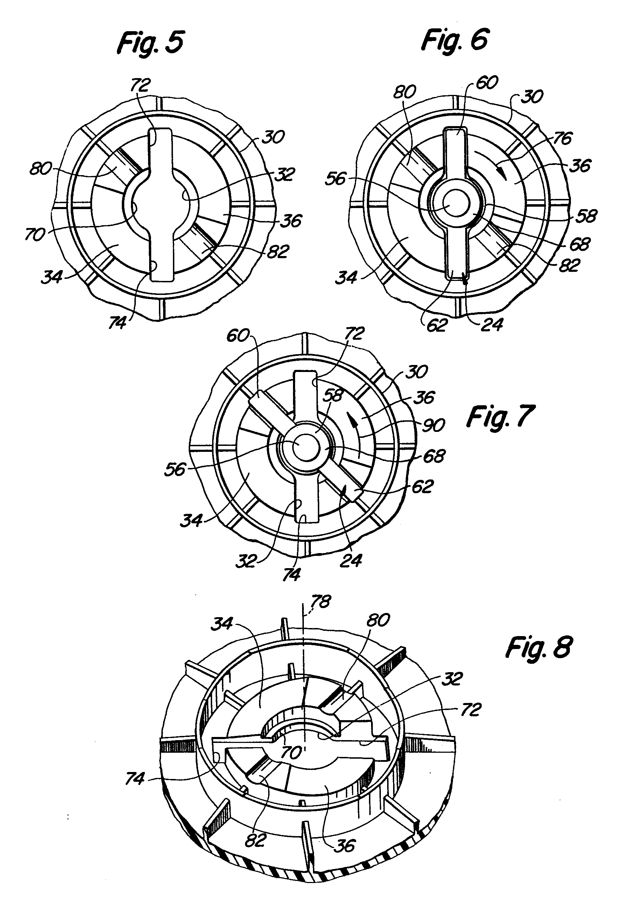

Referring to Fig 4 it will be seen that the hub 22 which has a central axis 46 has a raised portion 48 at the centre thereof. The raised portion 48 is composed of a generally cylindrical portion 50 at the centre of the raised portion 48 and an opposite pair of elongated portions 52 and 54 having concave upper surfaces forming an opposite pair of detent recesses 55 thereon. An elongated shaft 56 is mounted on the cylindrical portion 50 of the raised portion 48 so as to extend upwardly along the central axis 46.

The elongated handle 24 is composed of a generally cylindrical portion 58 at the centre thereof and opposite elongated portions 60 and 62 having convex lower surfaces forming an opposite pair of detent surfaces 63. The detent surfaces 63 normally reside in the detent recesses 55 in the raised portion 48 of the hub 22 when the second seed disk 28 is not mounted in the hub 22. The cylindrical portion 58 has a central aperture 64 therein for receiving the shaft 56. The central aperture 64 also receives a coil spring 66 which encircles the shaft 56. A keeper 68 is mounted on the upper end of shaft 56 opposite the hub 22. The keeper 68 is disposed on the opposite side of the coil spring 66 from the elongated handle 24.

Referring now to Fig 5 it will be seen that the elongated slot 32 within the central portion 30 of the seed disk 28 is composed of a generally circular central portion 70 and opposite elongated portions 72 and 74. Accordingly, the elongated slot 32 has a shape similar to the cross-sectional shape of the raised portion 48 of the hub 22 and a size slightly larger than the raised portion 48. When the seed disk 28 is mounted on the hub 22, the raised portion 48 resides within the elongated slot 32 to provide a positive, driving fit therebetween.

Fig 6 illustrates the central portion 30 of the seed disk 28
with the elongated handle 24 inserted through the elongated slot 32
in the disk 28. The elongated handle 24 has a cross-sectional shape
similar to that of the raised portion 48 and also the elongated slot
32. As in the case of the raised portion 48, the handle 24 is
slightly smaller than and therefore fits freely through the
elongated slot 32. The detent surfaces 63 at the bottom of the
handle 24 reside in the detent recesses 55 in the raised portion 48
to provide positive alignment of the opposite portions 52 and 54 of
the raised portion 48 with the opposite portions 60 and 62
respectively of the handle 24 to facilitate placement of the seed
disk 28 over the handle 24 and the raised portion 48. Thereafter,
rotation of the elongated handle 24 in a direction shown by arrows
76 causes the detent surfaces 63 of the opposite elongated portions
60 and 62 thereof to begin to ride up on the opposite camming ramps
34 and 36.

As illustrated in Figs 5-8 the opposite camming ramps 34 and 36
extend generally about major portions of a circle the centre of
which lies on a central axis 78 of the central portion 30 of the seed
disk 28. It will be seen that each of the camming ramps 34 and 36
is of partially circular shape so as to extend around a portion of
the central portion 30 between the opposite elongated portions 72
and 74 of the elongated slot 32. Each of the camming ramps 34 and
36 has a height which gradually increases in a common direction
around the central axis 78 to a maximum height at one end thereof.
The camming ramp 34 has a concave detent recess 80 in the top
surface thereof at a region of maximum height of the ramp 34.
Likewise, the camming ramp 36 has a concave detent recess 82 in the
top surface thereof at the region of maximum height. The detent
recesses 80 and 82 lie along a common diameter which intersects the
central axis 78.

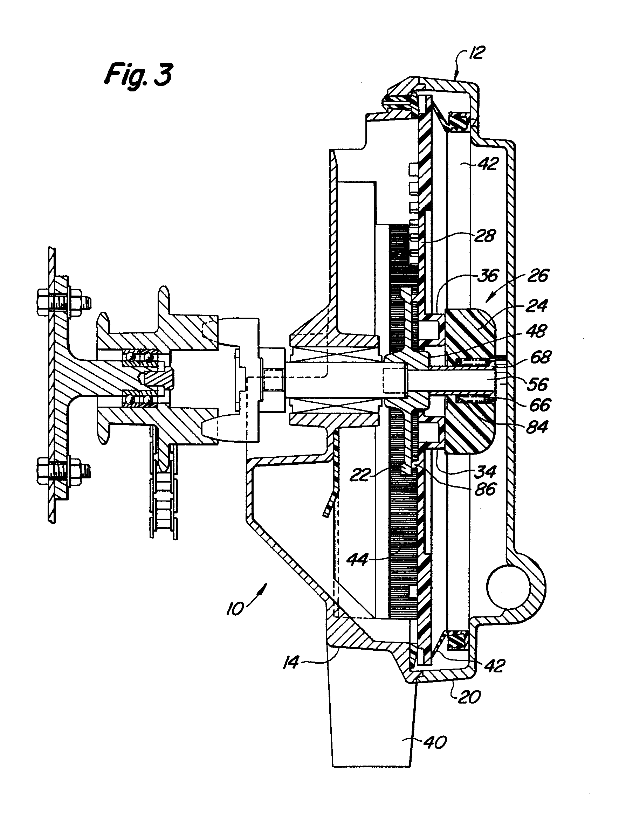

Referring again to Fig 4 it will be observed that the elongated
handle 24 is capable of movement up and down along the shaft 56 as
well as rotation about the shaft 56. Movement of the handle 24
along the shaft 56 in a direction away from the hub 22 is restrained
by the coil spring 66. As best seen in Fig 3 the coil spring 66
extends between the keeper 68 and an annular flange 84 formed in the wall of the central aperture 64 within the handle 24. The coil spring 66 bears against the keeper 68 at the upper end of the shaft 56 to exert a downward force on the handle 24. This downward force tends to maintain the detent surfaces 63 of the handle 24 seated in the detent recesses 55 on the raised portion 48. Upward movement of the handle 24 in a direction away from the raised portion 48 is possible only against the resilient resistance of the spring 66.

It will be noted in connection with Fig 6 that rotation of the handle 24 in the direction of the arrows 76 causes the opposite elongated portions 60 and 62 of the handle 24 to begin to ride up on the opposite camming ramps 34 and 36. Such rotational movement causes the handle 24 to move upwardly and away from the raised portion 48 against the resistance of the coil spring 66. When the opposite elongated portions 60 and 62 of the handle 24 reach the portions of maximum height of the camming ramps 34 and 36, the detent surfaces 63 at the bottom thereof eventually encounter and then seat within the opposite detent recesses 80 and 82. The detent recesses 80 and 82, the concave surfaces of which conform to the rounded detent surfaces 63 of the handle 24, hold the handle 24 in a locked position so as to maintain the seed disk 28 mounted on the hub 22. This position of the handle 24 relative to the central portion 30 of the seed disk 28 is illustrated in Fig 7.

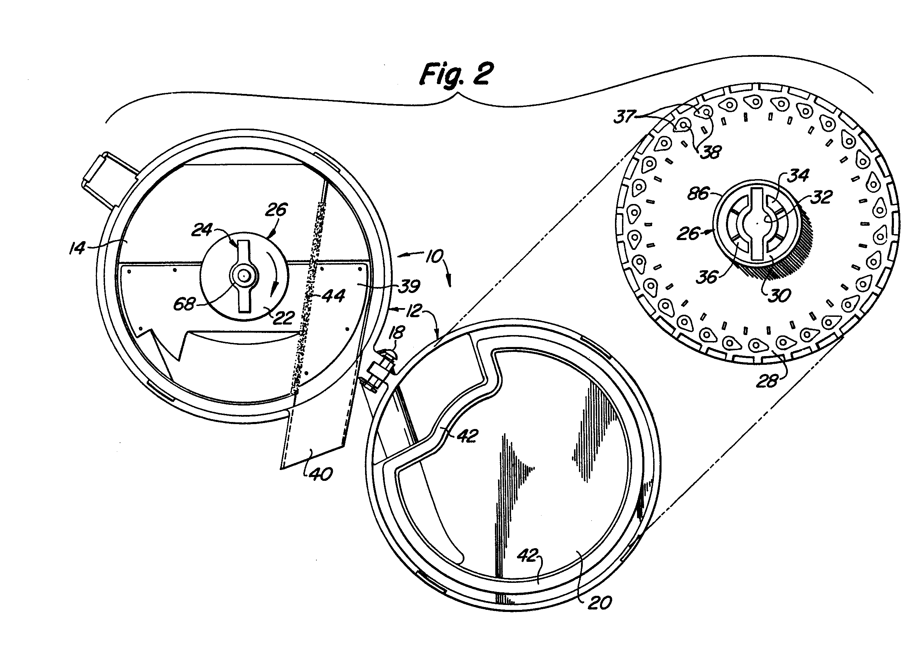

Fig 2 illustrates the side of the seed disk 28 opposite the camming ramps 34 and 36. As shown in Fig 2 such opposite side of the seed disk 28 is provided with an annular flange 86. When the seed disk 28 is mounted on the hub 22, the annular flange 86 resides against the face of the hub 22 to provide a sealing fit between the seed disk 28 and the hub 22. This prevents vacuum pressure within the second half shell 20 from being lost at the interface between the seed disk 28 and the hub 22. The manner in which the annular flange 86 seats against the hub 22 is illustrated in Fig 3. The coil spring 66 must be strong enough to maintain the annular flange 86 seated against the hub 22 in the face of forces exerted on the sides of the seed disk 28 by the seed mass and the vacuum.

Removal of the seed disk 28 from the hub 22 is initiated by rotating the handle 24 in a direction shown by arrows 90 in Fig 7. This unseats the opposite elongated portions 60 and 62 of the handle 24 from the detent recesses 80 and 82 and allows the portions 60 and 62 to ride down along the camming ramps 34 and 36 to the bottoms thereof where continued rotation of the handle 24 places it in the position shown in Fig 6. At this point the tension in the coil spring 66 is released and the detent surfaces 63 of the handle are seated in the detent recesses 55 in the raised portion 48 to align the handle 24 with the elongated slot 32. The seed disk 28 can then simply be lifted to pass the handle 24 through the elongated slot 32 and remove the disk 28 from the hub 22.

Alternatively, removal of the seed disk 28 from the hub 22 can be initiated by rotating the handle 24 in a direction opposite that of the arrows 90 shown in Fig 7. However, this causes the opposite elongated portions 60 and 62 of the handle 24 to drop abruptly off of the high ends of the camming ramps 34 and 36. Because rotation of the handle 24 in the direction shown by the arrows 90 provides a smoother and less abrupt action, this is generally preferred.

CLAIMS

1. An arrangement for releasably mounting a disk or other relatively flat member on a hub, comprising a relatively flat member (28) having an elongated aperture (32) therein, a hub (22), and an elongated handle (24) rotatably mounted on the hub, the handle being adapted to fit through the elongated aperture and, when rotated out of alignment with the aperture, to trap the said member on the hub, characterised by a ramp surface (34) adjacent the aperture (32), whereby the handle (24) rides up the ramp surface when it is rotated out of alignment with the aperture, and jams the said member on to the hub.

2. An arrangement according to claim 1, characterised in that there are two ramp surfaces (34, 36) on opposite sides respectively of the elongated aperture (32).

3. An arrangement according to claim 1 or 2, characterised in that the or each ramp surface (34, 36) leads to a detent recess (80, 82) for receiving the elongated handle (24).

4. An arrangement according to claim 3, characterised in that there are two diametrically opposite detent recesses (80, 82) for receiving opposite ends of the handle.

5. An arrangement according to any of claims 1 to 4, characterised in that the elongated handle (24) is also movable axially relative to the hub (22) and by a spring (66) biasing the handle axially towards the hub.

6. An arrangement according to claim 5, characterised by a shaft (56) mounted on the hub (22) receiving the elongated handle (24), and a keeper (68) mounted on the shaft to retain the elongated handle thereon, and in that the spring (66) is a coil spring encircling the shaft and disposed between the keeper and the elongated handle.

7. An arrangement according to any of claims 1 to 6, characterised

- 11 -

0140699

in that the hub (22) has a central raised portion (48) with a cross-sectional shape similar to but slightly smaller than the aperture in the relatively flat member and which resides within the aperture when the said member is mounted on the hub; and in that the elongated handle (24) has a cross-sectional shape similar to the cross-sectional shape of the raised portion of the hub.

8. An arrangement according to claim 7, characterised in that the aperture (32) has a generally circular central portion and a pair of elongated outer portions on opposite sides of the generally circular central portion.

9. An arrangement according to claim 7, wherein the relatively flat member (28) is a seed disk in a seed meter, characterised in that the disk (28) has an annular flange (86) on the side opposite the ramp surfaces (34, 36), the annular flange forming a seal with the hub (22) when the disk is mounted on the hub.

1/4

**Fig. 1**

**Fig. 4**

*Fig. 2*

**Fig. 3**

**Fig. 5**

**Fig. 6**

**Fig. 7**

**Fig. 8**